# EUROPEAN PATENT SPECIFICATION

(11) **EP 3 643 269 B1**
(45) Date of publication and mention of the grant of the patent: **24.11.2021**
(21) Application number: 19178707.6
(22) Date of filing: 06.06.2019
(51) Int. Cl.: A61C 1/07, A61C 3/03

(54) **VIBRATION APPARATUS FOR DENTAL CARE**
VIBRATIONSVORRICHTUNG ZUR ZAHNPFLEGE
APPAREIL DE VIBRATION POUR SOINS DENTAIRES

(30) Priority: 23.10.2018 KR 20180126798
(43) Date of publication of application: 29.04.2020
(73) Proprietor: B&L Biotech, Inc., Ansan-si, Gyeonggi-do 15462 (KR)
(72) Inventor: LEE, In Whan, 06004 Seoul (KR)
(74) Representative: Klunker IP Patentanwälte PartG mbB

(56) References cited:
- EP-A1- 2 332 485
- WO-A2-2004/073538
- US-A1- 2005 142 515
- US-A1- 2006 063 130
- US-A1- 2012 202 166
- US-A1- 2017 245 959
- US-B2- 8 770 973

## Description

### BACKGROUND OF THE DISCLOSURE

### Field of the Disclosure

The present disclosure relates to a vibration apparatus for dental care, and more particularly to a vibration apparatus for dental treatment configured to transmit vibration in a set vibration frequency range to control the viscosity of a resin.

### Description of the Related Art

Various instruments have been developed and used for dental treatment. In particular, resins have been used for cavity treatment or orthodontic treatment. Resins generally used in dental hospitals have light transmittance similar to that of natural teeth and a variety of saturations. Such a resin is attached to teeth after performing acid etching treatment on tooth dentin and/or enamel to remove organic matter, such as food waste, therefrom, thereby restoring the teeth. In such a tooth restoration process, a tooth cavity is formed, and then a resin is attached to the cavity. To perform this process, instruments for dental treatment are used. More particularly, a resin is applied to entrances of tubules to fill or close the tubules formed in tooth enamel or dentin after forming a cavity in a tooth. Here, a bonding agent may be applied to a tooth before application of a resin thereto. When a resin is attached to a tooth after such acid etching treatment, the resin is repeatedly applied in multip partle layers to the tooth so as to suppress generation of spaces or air bubbles therebetween. Resins can be classified into a flowable type, which is a liquid or is similar to a liquid, and a non-flowable type. Such resins are kneaded in a container, and then applied to a tooth by means of an instrument.

Meanwhile, when an instrument is removed after attaching a resin to a tooth, spaces or air bubbles may be formed between resin layers partially attached to the instrument. In addition, air bubbles may be formed inside a resin in a process of repeatedly attaching the resin in multiple layers to a tooth. Air bubbles generated during such a tooth treatment process using a resin may cause sharp pain or separation of the resin from a tooth. Accordingly, various research has been continuously carried out for effective attachment of a resin during dental treatment.

US 2017/0245959 A1 discloses a vibrator for attaching composite resin to a tooth, wherein the vibrator comprises a housing, a vibration motor, a micro-computer and a vibration tip.

WO 2004/073538 A2 discloses a dental vibrating apparatus with a low frequency and amplitude and high torque for the use in the mixing of dental materials or placement of dental restorations/materials as well as the carving/smoothing of dental restorations/materials or teethand also for the loosening/removal of certain dental restorations or placements.

US 8 770 973 B2 discloses a medical handpiece comprising a connection device for a filling material container, a vibration unit for the generation and transmission of vibrations to the filling material and a conveying device for conveying filling material from the container.

### [Related Art Document]

### [Patent Document]

Korean Patent Application Publication No. 10-2011-0115645

US Patent Application No. 11/429,290

### SUMMARY OF THE DISCLOSURE

The invention is as defined in the appended claims. Therefore, the present invention has been made in view of the above problems, and it is one object of the present invention to provide a vibration apparatus for dental care capable of controlling the viscosity of a resin applied to a tooth to allow easy forming of the resin.

It is another object of the present invention to provide a vibration apparatus for dental care capable of removing voids inside a resin by lowering the viscosity of the resin to improve the quality of treatment.

In accordance with an aspect of the present invention, the above and other objects can be accomplished by the provision of a vibration apparatus for dental care according to any of the claims 1 to 7.

### BRIEF DESCRIPTION OF THE DRAWINGS

The above and other objects, features and other advantages of the present disclosure will be more clearly understood from the following detailed description taken in conjunction with the accompanying drawings, in which:
FIG. 1 illustrates a schematic view of a vibration apparatus for dental care according to an exemplary embodiment of the present disclosure;
FIG. 2 illustrates a schematically exploded perspective view of the vibration apparatus for dental care according to the exemplary embodiment of FIG. 1;
FIG. 3 illustrates a schematic front view of the vibration apparatus for dental care according to the exemplary embodiment of FIG. 2; and
FIG. 4 is a graph schematically illustrating change in the viscosity of a resin dependent upon a vibration frequency of a vibration apparatus for dental care according to an exemplary embodiment of the present disclosure.

### DETAILED DESCRIPTION OF THE DISCLOSURE

Hereinafter, exemplary embodiments of the present disclosure are described in detail with reference to the accompanying drawings. However, it should be understood that the spirit and scope of the present disclosure are not limited to the embodiments and can be modified by addition, modification, or deletion of elements constituting the embodiments and such additions, modifications, and deletions are also within the spirit and scope of the present disclosure.

Hereinafter, the present disclosure is described in detail with reference to the accompanying drawings.

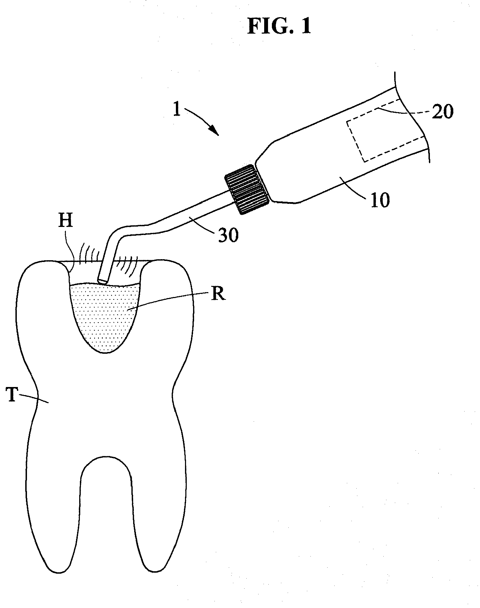

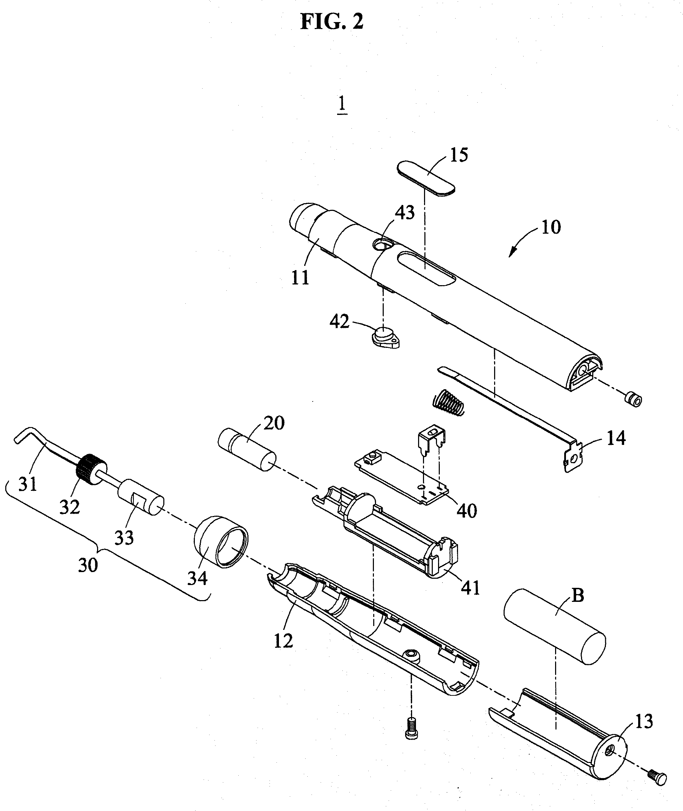

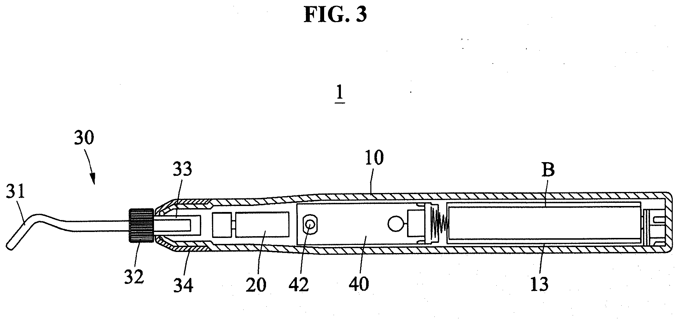

FIG. 1 schematically illustrates an operation of attaching a resin R to a cavity groove H of a tooth T by means of a vibration apparatus 1 for dental care according to an exemplary embodiment of the present disclosure, and FIG. 2 illustrates a schematically exploded perspective view of the vibration apparatus 1 for dental care shown in FIG. 1. In addition, FIG. 3 illustrates a schematic front view of the vibration apparatus 1 for dental care shown in FIG. 2.

Referring to FIGS. 1 and 2, the vibration apparatus 1 for dental care according to an embodiment of the present disclosure includes a body 10, a tip part 30, and a controller 40.

The body 10 includes a vibrator 20 embedded therein. As shown in FIG. 2, the body 10 includes housings 11 and 12 and a power supply 13. More particularly, the housings 11 and 12 are upper and lower housings separated from each other so as to be mutually engageable and include a space therein. In the space, the vibrator 20 is accommodated.

The vibrator 20 accommodated in the upper and lower housings 11 and 12 of the body 10 may include a vibration motor configured to generate vibration. The vibrator 20 may be any motor so long as it can generate vibration. An eccentric rotation motor is exemplified as an embodiment, but the present disclosure is not limited thereto. Of course, any one of various vibration generation motors such as a linear vibration motor may be adopted.

The power supply 13 is provided to be engaged with the lower housings 12 to supply power to the vibrator 20. The power supply 13 includes a battery housing configured to accommodate a battery B. Here, the battery B is connected to a power supply terminal 14 to supply power to the vibrator 20.

Meanwhile, the power supply 13 is illustrated and exemplified as receiving power from the embedded battery B in the embodiment, but the present disclosure is not limited thereto. That is, a modified embodiment, wherein the vibrator 20 receives power from the outside, not from the embedded battery B, is applicable.

For reference, symbol 15, which has not been described, of FIG. 2 denotes a display window provided at the upper housing 11.

The tip part 30 is connected to the body 10 to extend to the outside of the body 10 as shown in FIG. 1 so that vibration energy of the vibrator 20 is transmitted to the resin R coated on the tooth T. Here, the resin R is applied to a cavity groove H formed for treatment of the tooth T, and the tip part 30 contacts the resin R in the resin R-applied state so that the vibration energy is transmitted to the resin R.

The tip part 30 includes a vibration tip 31, a tip-engaging part 34, and a vibration bushing 33.

The vibration tip 31 extends to the outside of the body 10. Here, the vibration tip 31 transmits vibration from the vibrator 20 to the resin R contacting the vibration tip 31. For this, the vibration tip 31 is elongated in a longitudinal direction. The vibration tip 31 preferably has a bent end extended therefrom to facilitate contact with the resin R.

The tip-engaging part 34 couples the vibration tip 31 to one side of the body 10. As shown in FIGS. 2 and 3, the tip-engaging part 34 may be coupled to one side of the upper and lower housings 11 and 12 in a state where the upper and lower housings 11 and 12 are coupled to each other, so that the vibration tip 31 can be coupled to the upper and lower housings 11 and 12 in the coupled state of the upper and lower housings 11 and 12.

The vibration bushing 33 adds mass to the vibration tip 31. As shown in FIG. 3, the vibration bushing 33 is coupled to one end of the vibration tip 31 to reduce a vibration frequency of the vibration tip 31. That is, the vibration bushing 33 serves to increase a total mass of the connected vibration tip 31, thereby reducing a vibration frequency of the vibration tip 31. For reference, when a vibration frequency of the vibrator 20 is not appropriately controlled, a desired vibration frequency of the vibration tip 31 may be generated by adjusting the mass of the vibration bushing 33.

Meanwhile, the vibration bushing 33 is preferably provided to be spaced apart from the vibrator 20 by a predetermined distance. Due to the distance between the vibrator 20 and the vibration bushing 33, vibration generated from the vibrator 20 is effectively transmitted to the vibration bushing 33 via the upper and lower housings 11 and 12 of the body 10 so that the vibration tip 31 vibrates according to the vibration of the vibration bushing 33.

In addition, a vibration tip rotation operator 32 configured to rotate together with the vibration tip 31 may be further provided between the vibration tip 31 and the vibration bushing 33. The vibration tip rotation operator 32 is fixedly coupled to the vibration tip 31 so that the vibration tip 31 also rotates together with the vibration tip rotation operator 32 upon rotation of the vibration tip rotation operator 32. Accordingly, a user may rotate the vibration tip 31 to a desired position through the vibration tip rotation operator 32 so that a position of an end of the vibration tip 31 may be changed to contact the resin R.

The controller 40 is electrically connected to the vibrator 20 to control the magnitude of vibration energy of the vibrator 20, thereby controlling the magnitude of vibration transmitted to the tip part 30. Here, the controller 40 controls a vibration frequency transmitted to the tip part 30 within a range of 3 to 70 Hz. The viscosity of the resin R may be controlled by adjusting the magnitude of vibration energy transmitted to the tip part 30 by the controller 40.

The controller 40 is accommodated in the body 10 so that a microcomputer configured to receive power from the power supply 13 including the battery B is included. In addition, the controller 40 including the microcomputer is seated in the microcomputer holder 41 and thus accommodated in the body 10, thereby controlling the generation of vibration by a control switch 42.

For example, a user can manipulate the control switch 42 to turn the operation of the vibrator 20 on/off.

Here, the controller 40 serves to control a range of vibration frequencies, generated by the vibrator 20 and transmitted to the tip part 30, to 3 to 70 Hz.

More particularly, when a user first manipulates the control switch 42 to generate a control signal, the vibrator 20 may start to vibrate and a vibration frequency of 3 to 70 Hz may be generated by the vibration of the vibrator 20.

The controller 40 may sense the vibration frequency of the vibration tip 31. More particularly, the controller 40 may sense the vibration frequency of the vibration tip 31 also during dental treatment where the vibration tip 31 contacts the resin R.

When the controller 40 determines that the vibration frequency of the vibration tip 31 is outside of the preset range, i.e., a range of 3 to 70 Hz, a display window 15 may inform the outside that the vibration frequency of the vibration tip 31 is outside of a normal range.

When the display window 15 indicates that the vibration frequency of the vibration tip 31 is outside of a normal range, a user may manipulate the control switch 42 so that the controller 40 controls vibration energy of the vibrator 20 to adjust the vibration frequency of the vibration tip 31 within a range of 3 to 70 Hz.

For example, when a user manipulates the control switch 42 in the case wherein the vibration frequency of the vibration tip 31 is less than 3 Hz, the controller 40 increases the vibration energy of the vibrator 20 to adjust the vibration frequency of the vibration tip 31within a range of 3 to 70 Hz. When the vibration frequency of the vibration tip 31 is greater than 70 Hz, the controller 40 lowers the vibration energy of the vibrator 20 to adjust the vibration frequency of the vibration tip 31 within a range of 3 to 70 Hz.

Alternatively, even when a user does not manipulate the control switch 42, the controller 40 may control the vibration energy of the vibrator 20 such that the vibration frequency of the vibration tip 31 is within a range of 3 to 70 Hz.

In addition, although not illustrated in detail, the control switch 42 may rotate or slide so that the controller 40 controls the vibration frequency to increase or decrease according to the rotation or sliding direction.

For reference, the vibration frequency of vibration energy generated from the vibrator 20 including the vibration motor is relatively larger than the vibration frequency of vibration energy transmitted to the vibration tip 31. That is, the vibration energy of the vibrator 20 is sequentially reduced via the body 10 and the vibration bushing 33 and is transmitted to the vibration tip 31. The vibration frequency of such vibration energy transmitted to the vibration tip 31 is within a range of 3 to 70 Hz.

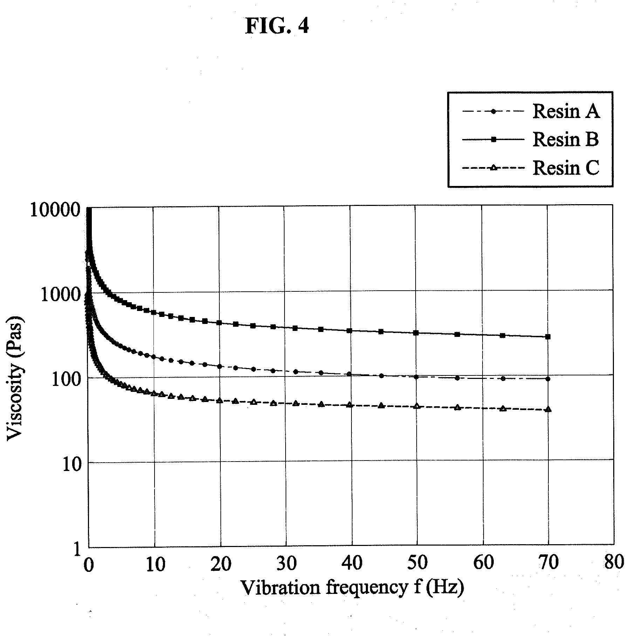

Referring to the graph of FIG. 4, viscosity changes according to vibration frequencies of the vibration tip 31 using various resin types R are schematically illustrated.

From the graph of FIG. 4, it can be confirmed that, when the vibration tip 31 transmits vibration energy to the resin R in a vibration frequency range of 3 to 70 Hz, the viscosity of the resin R is significantly decreased and a change in the viscosity becomes almost constant. Since the resin R is applied to the cavity groove H formed in the tooth T of FIG. 1 and then should be formed into the shape of the tooth T in a short time, the viscosity of the resin R is preferably low and uniform. Accordingly, as shown in the graph of FIG. 4, when vibration energy is applied in a frequency range of 3 to 70 Hz by the vibration tip 31 and thus the viscosity of the resin R is lowered and becomes uniform with little change, the resin R may be formed in a uniform shape while air is removed therefrom.

That is, the resin R may be formed in low viscosity, i.e., in a dilute state, due to the vibration frequency applied to the resin R by the vibration tip 31. In addition, the resin R having low and uniform viscosity is slowly hardened to penetrate without voids to a desired depth in a desired shape before hardening thereof.

Meanwhile, in the embodiment, the vibration frequency, which is generated by the vibrator 20 and transmitted to the vibration tip 31, is 3 to 70 Hz, more preferably 10 to 70 Hz.

In other words, the viscosity of the resin R greatly changes when the vibration frequency of the vibration tip 31 is smaller than 3 Hz, but the viscosity of the resin R is gently decreased as the vibration frequency becomes 3 Hz or more. In addition, when the vibration frequency of the vibration tip 31 is 10 Hz or more, the viscosity of the resin R becomes lowest, thus being uniform.

In addition, when the vibration frequency of the vibration tip 31 is higher than 70 Hz, a vibration transmitted to a tooth through the vibration tip 31 is too large, which may make the tooth uncomfortable and a user grasping and using the vibration apparatus 1 for dental care uncomfortable. Accordingly, the vibration frequency of the vibration tip 31 is preferably 70 Hz or less.

Now, an operation procedure of the vibration apparatus 1 for dental care according to an exemplary embodiment of the present disclosure is described with reference to FIG. 1.

As shown in FIG. 1, a cavity groove H is formed in a tooth T to be treated, and then a resin R is applied to the cavity groove H. Although the resin R is not illustrated in detail, it may be thinly applied several times.

When the resin R is applied to the cavity groove H, a vibration tip 31 of a tip part 30 comes into contact with the resin R to transmit vibration energy of the vibration tip 31 to the resin R. Here, the vibration frequency of the vibration energy transmitted to the resin R via the vibration tip 31 is in a range of 3 to 70 Hz. The viscosity of the resin R is lowered due to the vibration energy transmitted thereto (see graph of FIG. 4) so that air such as air bubbles in the resin R is removed therefrom. Accordingly, the resin R may be formed in a desired shape without voids therein.

In accordance with the present disclosure having the aforementioned configuration, first, the viscosity of a resin can be lowered by transmitting vibration to a resin in a preset vibration frequency range of 3 to 70 Hz. Since a resin having a low viscosity can be formed to the shape of a tooth in a short time, the resin can penetrate a cavity groove of the tooth regardless of the depth thereof.

Second, air bubbles inside a resin can be discharged to the outside by using a resin with a low viscosity, which allows treatment with a resin without voids. Accordingly, existing problems, such as sharp pain in a tooth and resin separation, due to voids in a resin after dental treatment can be addressed, which improves the reliability of dental treatment.

While the present invention has been described referring to the exemplary embodiments, those skilled in the art will appreciate that many modifications and changes can be made to the present invention without departing from the spirit and essential characteristics of the present invention.

### [Description of Symbols]

- 1:: VIBRATION APPARATUS FOR DENTAL CARE
- 10:: BODY
- 11:: UPPER HOUSING
- 12:: LOWER HOUSING
- 20:: VIBRATOR
- 30:: TIP PART
- 31:: VIBRATION TIP
- 32:: VIBRATION TIP ROTATION OPERATOR
- 33:: VIBRATION BUSHING
- 40:: CONTROLLER
- T:: TOOTH
- H:: CAVITY GROOVE
- R:: RESIN

may be thinly applied several times.

When the resin R is applied to the cavity groove H, a vibration tip 31 of a tip part 30 comes into contact with the resin R to transmit vibration energy of the vibration tip 31 to the resin R. Here, the vibration frequency of the vibration energy transmitted to the resin R via the vibration tip 31 is in a range of 3 to 70 Hz. The viscosity of the resin R is lowered due to the vibration energy transmitted thereto (see graph of FIG. 4) so that air such as air bubbles in the resin R is removed therefrom. Accordingly, the resin R may be formed in a desired shape without voids therein.

In accordance with the present disclosure having the aforementioned configuration, first, the viscosity of a resin can be lowered by transmitting vibration to a resin in a preset vibration frequency range of 3 to 70 Hz. Since a resin having a low viscosity can be formed to the shape of a tooth in a short time, the resin can penetrate a cavity groove of the tooth regardless of the depth thereof.

Second, air bubbles inside a resin can be discharged to the outside by using a resin with a low viscosity, which allows treatment with a resin without voids. Accordingly, existing problems, such as sharp pain in a tooth and resin separation, due to voids in a resin after dental treatment can be addressed, which improves the reliability of dental treatment.

While the present invention has been described referring to the exemplary embodiments, those skilled in the art will appreciate that many modifications and changes can be made to the present invention without departing from the characteristics of the present invention as defined in the appended claims.

### [Description of Symbols]

- 1:: VIBRATION APPARATUS FOR DENTAL CARE
- 10:: BODY
- 11:: UPPER HOUSING
- 12:: LOWER HOUSING
- 20:: VIBRATOR
- 30:: TIP PART
- 31:: VIBRATION TIP
- 32:: VIBRATION TIP ROTATION OPERATOR
- 33:: VIBRATION BUSHING
- 40:: CONTROLLER
- T:: TOOTH
- H:: CAVITY GROOVE
- R:: RESIN

## Claims

1. A vibration apparatus (1) for dental care, comprising:
a body (10) in which a vibrator (20) is embedded;
a tip part (30) connected to the body (10) to extend to an outside of the body (10) and configured to transmit vibration energy of the vibrator (20) to a resin applied to a tooth; and
a controller (40) configured to control a magnitude of vibration energy generated from the vibrator (20) and transmitted to the tip part (30),
wherein the controller (40) comprises a microcomputer configured to control operation of the vibrator (20) and a vibration frequency of a vibration tip (31) of the tip part (30) within a range of 3 to 70 Hz,
**characterized in that** the controller (40) is configured to sense a vibration frequency of the vibration tip (31) and, when the vibration frequency of the vibration tip (31) is outside a range of 3 to 70 Hz, a display window (15) provided in the body (10) displays that the vibration frequency of the vibration tip (31) is outside of the range.

2. The vibration apparatus (1) according to claim 1, wherein the vibrator (20) comprises a vibration motor configured to generate vibration energy.

3. The vibration apparatus (1) according to claim 1, wherein the vibration tip (31) is connected to one side of the body (10) and extends outside of the body (10); and wherein
a vibration bushing (33) is provided and configured to add mass to the vibration tip (31).

4. The vibration apparatus (1) according to claim 3, wherein the vibration bushing (33) is provided to be spaced apart from the vibrator (20) by a predetermined distance.

5. The vibration apparatus (1) according to claim 1, wherein the controller (40) comprises a control switch (42) provided in the body (10) and manipulated by a user for input of a control signal, wherein, when the control switch (42) is manipulated in a state in which the display window (15) displays that a vibration frequency of the vibration tip (31) is outside of the range, the controller (40) controls the vibration energy of the vibrator (20) to adjust the vibration frequency of the vibration tip (31) within a range of 3 to 70 Hz.

6. The vibration apparatus (1) according to claim 1, wherein the controller (40) serves to control a vibration frequency of the tip part (30) within a range of 10 to 70 Hz.

7. The vibration apparatus according to claim 3, wherein the tip part (30) further comprises:
a vibration tip rotation operator (32) provided between the vibration tip (31) and the vibration bushing (33) to rotate the vibration tip (31) to a desired position.

## Patentansprüche

1. Vibrationsgerät (1) für die Zahnpflege, umfassend:
einen Körper (10), in dem ein Vibrator (20) eingebettet ist;
ein Spitzenteil (30), das mit dem Körper (10) verbunden ist, um sich zu einer Außenseite des Körpers (10) zu erstrecken, und das so konfiguriert ist, dass es Schwingungsenergie des Vibrators (20) auf einen auf einen Zahn aufgebrachten Kunststoff überträgt; und
eine Steuerung (40), die so konfiguriert ist, dass sie eine Menge der von dem Vibrator (20) erzeugten und übertragenen Vibrationsenergie steuert,
wobei die Steuerung (40) einen Mikrocomputer umfasst, der so konfiguriert ist, dass er den Betrieb des Vibrators (20) und eine Schwingungsfrequenz einer Schwingungsspitze (31) des Spitzenteils (30) innerhalb eines Bereichs von 3 bis 70 Hz steuert,
**dadurch gekennzeichnet, dass** die Steuerung (40) so konfiguriert ist, dass sie eine Schwingungsfrequenz der Schwingungsspitze (31) erfasst und, wenn die Schwingungsfrequenz der Schwingungsspitze (31) außerhalb eines Bereichs von 3 bis 70 Hz liegt, ein in dem Gehäuse (10) vorgesehenes Anzeigefenster (15) anzeigt, dass die Schwingungsfrequenz der Schwingungsspitze (31) außerhalb des Bereichs liegt.

2. Vibrationsgerät (1) nach Anspruch 1, wobei der Vibrator (20) einen Vibrationsmotor umfasst, der zur Erzeugung von Vibrationsenergie konfiguriert ist.

3. Vibrationsgerät (1) nach Anspruch 1, wobei die Schwingungsspitze (31) mit einer Seite des Körpers (10) verbunden ist und sich außerhalb des Körpers (10) erstreckt; und wobei eine Vibrationsbuchse (33) vorgesehen und so konfiguriert ist, dass sie der Vibrationsspitze (31) Masse hinzufügt.

4. Vibrationsgerät (1) nach Anspruch 3, wobei die Vibrationsbuchse (33) mit einem vorgegebenen Abstand zum Vibrator (20) vorgesehen ist.

5. Vibrationsvorrichtung (1) nach Anspruch 1, wobei die Steuerung (40) einen Steuerschalter (42) umfasst, der in dem Körper (10) vorgesehen ist und von einem Benutzer zur Eingabe eines Steuersignals betätigt wird, wobei, wenn der Steuerschalter (42) in einem Zustand betätigt wird, in dem das Anzeigefenster (15) anzeigt, dass eine Schwingungsfrequenz der Schwingungsspitze (31) außerhalb des Bereichs liegt, die Steuerung (40) die Schwingungsenergie des Vibrators (20) steuert, um die Schwingungsfrequenz der Schwingungsspitze (31) innerhalb eines Bereichs von 3 bis 70 Hz einzustellen.

6. Vibrationsgerät (1) nach Anspruch 1, wobei das Steuergerät (40) dazu dient, eine Vibrationsfrequenz des Spitzenteils (30) in einem Bereich von 10 bis 70 Hz zu steuern.

7. Vibrationsgerät nach Anspruch 3, wobei das Spitzenteil (30) ferner umfasst:
einen Drehantrieb (32) für die Schwingungsspitze, der zwischen der Schwingungsspitze (31) und der Schwingungsbuchse (33) vorgesehen ist, um die Schwingungsspitze (31) in eine gewünschte Position zu drehen.

## Revendications

1. Appareil à vibrations (1) pour soins dentaires, comprenant :
un corps (10), où un vibreur (20) est intégré ;
une partie de pointe (30) reliée au corps (10) pour s'étendre vers un extérieur du corps (10) et configurée pour transmettre une énergie de vibration du vibreur (20) à une résine appliquée sur une dent, et
un contrôleur (40) configuré pour commander une grandeur d'énergie de vibration générée à partir du vibreur (20) et transmise à la partie de pointe (30),
dans lequel le contrôleur (40) comprend un micro-ordinateur configuré pour commander le fonctionnement du vibreur (20) et une fréquence de vibration d'une pointe à vibrations (31) de la partie de pointe (30) dans les limites d'une plage allant de 3 à 70 Hz,
**caractérisé en ce que** le contrôleur (40) est configuré pour détecter une fréquence de vibration de la pointe à vibrations (31), et lorsque la fréquence de vibration de la pointe à vibrations (31) est hors des limites d'une plage allant de 3 à 70 Hz, une fenêtre d'affichage (15) fournie dans le corps (10) affiche que la fréquence de vibration de la pointe à vibrations (31) est hors des limites de la plage.

2. Appareil à vibrations (1) selon la revendication 1, dans lequel le vibreur (20) comprend un moteur à vibrations configuré pour générer une énergie de vibration.

3. Appareil à vibrations (1) selon la revendication 1, dans lequel la pointe à vibrations (31) est reliée à un côté du corps (10), et s'étend hors du corps (10), et dans lequel
une douille à vibrations (33) est prévue et configurée pour ajouter de la masse à la pointe à vibrations (31).

4. Appareil à vibrations (1) selon la revendication 3, dans lequel la douille à vibrations (33) est prévue pour être espacée du vibreur (20) à raison d'une distance prédéterminée.

5. Appareil à vibrations (1) selon la revendication 1, dans lequel le contrôleur (40) comprend un commutateur de commande (42) prévu dans le corps (10) et manœuvré par un utilisateur pour l'entrée d'un signal de commande, dans lequel lorsque le commutateur de commande (42) est manœuvré dans un état où la fenêtre d'affichage (15) affiche qu'une fréquence de vibration de la pointe à vibrations (31) est hors des limites de la plage, le contrôleur (40) commande l'énergie de vibration du vibreur (20) de manière à ajuster la fréquence de vibration de la pointe à vibrations (31) dans les limites de la plage allant de 3 à 70 Hz.

6. Appareil à vibrations (1) selon la revendication 1, dans lequel le contrôleur (40) sert à commander une fréquence de vibration de partie de pointe (30) dans les limites d'une plage allant de 10 à 70 Hz.

7. Appareil à vibrations selon la revendication 3, dans lequel la partie de pointe (30) comprend en outre :
un générateur de rotation de pointe à vibrations (32) prévu entre la pointe à vibration (31) et la douille à vibrations (33) afin de faire tourner la pointe à vibrations (31) vers une position souhaitée.
